(19) Europäisches Patentamt
European Patent Office
Office européen des brevets

(11) **EP 3 348 431 A1**

(12) **EUROPEAN PATENT APPLICATION**

(43) Date of publication:
**18.07.2018 Bulletin 2018/29**

(51) Int Cl.:
**B60H 1/32** (2006.01)　　　**F25B 17/02** (2006.01)
**F25B 27/02** (2006.01)　　　**F25B 15/16** (2006.01)
**B60H 1/00** (2006.01)　　　**F25B 17/08** (2006.01)

(21) Application number: **17211180.9**

(22) Date of filing: **29.12.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **16.01.2017　JP 2017005450**

(71) Applicant: **TOYOTA JIDOSHA KABUSHIKI
KAISHA**
**Toyota-shi, Aichi-ken, 471-8571 (JP)**

(72) Inventor: **TSUBOUCHI, Masakatsu**
**Aichi-ken, 471-8571 (JP)**

(74) Representative: **J A Kemp**
**14 South Square**
**Gray's Inn**
**London WC1R 5JJ (GB)**

(54) **VEHICULAR AIR-CONDITIONING APPARATUS PROVIDED WITH ADSORPTION HEAT PUMP**

(57)　　A vehicular air-conditioning apparatus (10) includes an adsorption heat pump (20) including a plurality of containers (22, 24) provided with an adsorption-desorption device (22A, 24A) and an evaporation-condensation device (22B, 24B), a circulation path configured to circulate a coolant between an internal combustion engine (80) and the adsorption-desorption device (22A, 24A) of the container (22, 24) that performs a desorption process, a heat supply device (82) that is disposed in the circulation path to heat the coolant that circulates through the circulation path, and a control device (30) configured to control a flow rate of the coolant in the circulation path such that a flow rate of the coolant, which flows into the adsorption-desorption device (22A, 24A) of the container (22, 24) that performs a desorption process, is reduced to be below a predetermined flow rate when a temperature of the coolant in the circulation path on a downstream side of the heat supply device (82) is lower than a predetermined value.

FIG. 1

**Description**

BACKGROUND OF THE INVENTION

1. Field of the Invention

The present invention relates to a vehicular air-conditioning apparatus provided with an adsorption heat pump.

2. Description of Related Art

Japanese Unexamined Patent Application Publication No. 2004-291669 (JP 2004-291669 A) discloses an air-conditioner provided with an adsorber that cools a refrigerant, thereby adsorbing the refrigerant, and heats the refrigerant, thereby desorbing the refrigerant, and an evaporative condenser in which the refrigerant evaporates at adsorption in the adsorber and the refrigerant condenses at desorption in the adsorber. In the air-conditioner, in a case where the temperature of a coolant of an engine that is a heat source for desorption is equal to or higher than a predetermined temperature, the flow rate of a pump that makes the coolant flow into the adsorber that performs a desorption process is limited, and the power of the pump is saved.

Here, in the air-conditioner disclosed in JP 2004-291669 A, in order to secure cooling performance, there is a need for supplying the coolant having a specified temperature or higher as a high-temperature heat source at desorption in the adsorber. However, JP 2004-291669 A does not disclose means for raising the temperature of the coolant at an early stage in a case where the coolant does not reach the specified temperature. For example, in a case where the temperature of the coolant does not reach the specified temperature, the temperature of the coolant is rather difficult to rise even when the flow rate of the pump is increased.

SUMMARY OF THE INVENTION

The invention provides a vehicular air-conditioning apparatus provided with an adsorption heat pump that secures a high-temperature heat source needed for a desorption process at an earlier stage.

An aspect of the invention relates to a vehicular air-conditioning apparatus including an adsorption heat pump configured to include a plurality of containers provided with an adsorption-desorption device and an evaporation-condensation device, a circulation path, a heat supply device, and a control device. The adsorption-desorption device is configured to perform adsorption and desorption of a refrigerant, the evaporation-condensation device is configured to perform evaporation and condensation of the refrigerant, and the adsorption heat pump is configured to repeatedly perform an adsorption process and a desorption process in the adsorption-desorption device each of the containers. The circulation path is configured to circulate a coolant between an internal combustion engine and the adsorption-desorption device of the container that performs the desorption process. The heat supply device is disposed in the circulation path to heat the coolant that circulates through the circulation path. The control device is configured to control a flow rate of the coolant in the circulation path such that a flow rate of the coolant, which flows into the adsorption-desorption device of the container that performs the desorption process, is reduced to be below a predetermined flow rate when a temperature of the coolant in the circulation path on a downstream side of the heat supply device is lower than a predetermined value.

According to the aspect of the invention, the adsorption heat pump is configured to include the containers. Each of the containers has the adsorption-desorption device configured to perform the adsorption and desorption of the refrigerant and the evaporation-condensation device configured to perform the evaporation and condensation of the refrigerant. Each container is configured to repeatedly perform the adsorption process and the desorption process.

Meanwhile, the vehicular air-conditioning apparatus is provided with the circulation path configured to circulate the coolant between the internal combustion engine and the adsorption-desorption device of the container that performs the desorption process. Additionally, the heat supply device, which heats the coolant circulating through the circulation path, is disposed in the circulation path. Also, the vehicular air-conditioning apparatus has the control device configured to control the flow rate of the coolant in the circulation path such that the flow rate of the coolant, which flows into the adsorption-desorption device of the container that performs the desorption process, is reduced to be below the predetermined flow rate when the temperature of the coolant in the circulation path on the downstream side of the heat supply device is lower than the predetermined value. Here, the "predetermined value" includes, for example, a temperature value that becomes optimal in the desorption process of the adsorption-desorption device, a minimum temperature value at which the desorption process is performed, or the like.

According to the aspect of the invention, the control device is configured to control the flow rate of the coolant in the circulation path such that the flow rate of the coolant, which flows into the adsorption-desorption device of the container that performs the desorption process, is reduced to be below the predetermined flow rate when the temperature of the coolant before flowing into the adsorption-desorption device of the container that performs the desorption process, on the downstream side of the heat supply device, is lower than the predetermined value. Accordingly, since the temperature of the coolant rises at an earlier stage due to the heat received from the internal combustion engine or the heat supply device, the high-temperature heat source needed for the desorption process can be secured at an earlier stage.

In the vehicular air-conditioning apparatus according to the aspect of the invention, the control device may be configured to control the flow rate of the coolant in the circulation path such that the flow rate of the coolant flowing into the adsorption-desorption device is reduced to be below the predetermined flow rate when a temperature of the coolant in the circulation path on an upstream side of the heat supply device is lower than the predetermined value.

Here, the "predetermined value" includes, for example, a temperature value that becomes optimal for the cooling of the internal combustion engine, a temperature value in which a temperature drop in the heater core is taken into consideration in a case where the heater core is provided on the upstream side of the heat supply device, or the like. According to the aspect of the invention, the control device is configured to control the flow rate of the coolant in the circulation path such that the flow rate of the coolant, which flows into the adsorption-desorption device of the container that performs the desorption process, is reduced to be below the predetermined flow rate when the temperature of the coolant supplied to the internal combustion engine side on the upstream side of the heat supply device, is lower than the predetermined value. Accordingly, since the temperature of the coolant rises at an earlier stage due to the heat received from the heat supply device, the high-temperature heat source needed for the desorption process can be secured at an earlier stage.

In the vehicular air-conditioning apparatus according to the aspect of the invention, the circulation path may include a flow passage control valve disposed between the internal combustion engine and the heat supply device, the flow passage control valve may be configured to cause the coolant to selectively bypass from the circulation path between the internal combustion engine and the heat supply device to the circulation path downstream of the adsorption-desorption device of the container that performs the desorption process, and the control device may control the flow passage control valve such that the flow rate of the coolant flowing into the adsorption-desorption device is reduced to be below the predetermined flow rate by adjusting a flow rate of the coolant caused to bypass downstream of the adsorption-desorption device.

According to the aspect of the invention, there is provided a bypass for the coolant that returns to the internal combustion engine without passing through the adsorption-desorption device of the container, which performs the desorption process, from the internal combustion engine. The coolant that flows through the bypass is controlled by the flow passage control valve. The control device can adjust the flow passage control valve and return the coolant, which has flowed out of the internal combustion engine, to the internal combustion engine again before the coolant is made to flow into the adsorption-desorption device of the container that performs the desorption process, thereby raising the temperature of the coolant at an earlier stage.

In the vehicular air-conditioning apparatus according to the aspect of the invention, the circulation path may include a pump configured to circulate the coolant through the circulation path, and the control device may be configured to control the pump such that the flow rate of the coolant flowing into the adsorption-desorption device is reduced to be below the predetermined flow rate by reducing a discharge amount of the pump.

According to the aspect of the invention, by further reducing the flow rate of the coolant in the circulation path to be below the predetermined flow rate with the pump, the temperature of the coolant rises at an earlier stage due to the heat received from the internal combustion engine or the heat supply device.

In the vehicular air-conditioning apparatus according to the aspect of the invention, the control device may be configured to control the flow rate of the coolant in the circulation path such that the flow rate of the coolant flowing into the adsorption-desorption device of the container that performs a desorption process is greatly reduced to be below the predetermined flow rate as the temperature is lower when the temperature of the coolant in the circulation path on the downstream side of the heat supply device is lower than the predetermined value.

According to the aspect of the invention, the flow rate of the coolant, which flows into the adsorption-desorption device of the container that performs the desorption process, can be greatly reduced to be below the predetermined flow rate in accordance with a decrease in the temperature of the coolant in the circulation path on the downstream side of the heat supply device. Accordingly, the temperature of the coolant to be supplied to the adsorption-desorption device of the container that performs the desorption process can be efficiently raised.

In the vehicular air-conditioning apparatus according to the aspect of the invention, the control device may be configured to control the flow rate of the coolant in the circulation path such that the flow rate of the coolant flowing into the adsorption-desorption device reaches the predetermined flow rate in a case where the temperature of the coolant in the circulation path on the downstream side of the heat supply device is equal to or higher than the predetermined value.

According to the aspect of the invention, in a case where the temperature of the coolant in the circulation path on the upstream side of the heat supply device reaches the specified value, the flow rate of the coolant, which flows into the adsorption-desorption device of the container that performs the desorption process, can be returned to the predetermined flow rate. Accordingly, the high-temperature heat source can be continuously supplied to the adsorption-desorption device of the container that performs the desorption process to improve cooling performance.

In the vehicular air-conditioning apparatus according to the aspect of the invention, the heat supply device may include a heat storage unit configured to store heat.

According to the aspect of the invention, the temperature of the coolant, which flows into the adsorption-desorption device of the container that performs the desorption process, can be raised at an earlier stage by releasing the heat that is stored in the heat storage unit at the cool-temperature of the internal combustion engine.

With the vehicular air-conditioning apparatus provided with an adsorption heat pump of the invention, the high-temperature heat source needed for the desorption process can be secured at an earlier stage.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a configuration view of a vehicular air-conditioning apparatus provided with an adsorption heat pump related to a first embodiment, and is a view illustrating states at a cooling request and at dehumidification heating;
FIG. 2 is a block diagram of a control system in the vehicular air-conditioning apparatus provided with an adsorption heat pump related to the first embodiment;
FIG. 3A is a view illustrating an operating state of a flow passage control valve used for the vehicular air-conditioning apparatus provided with an adsorption heat pump related to the first embodiment;
FIG. 3B is a view illustrating an operating state of the flow passage control valve used for the vehicular air-conditioning apparatus provided with an adsorption heat pump related to the first embodiment;
FIG. 3C is a view illustrating an operating state of the flow passage control valve used for the vehicular air-conditioning apparatus provided with an adsorption heat pump related to the first embodiment;
FIG. 3D is a view illustrating an operating state of the flow passage control valve used for the vehicular air-conditioning apparatus provided with an adsorption heat pump related to the first embodiment;
FIG. 4 is a view schematically illustrating an indoor air-conditioning unit used for the vehicular air-conditioning apparatus provided with an adsorption heat pump related to the first embodiment;
FIG. 5 is a configuration view of the vehicular air-conditioning apparatus provided with an adsorption heat pump related to the first embodiment, and is a view illustrating a state at a heating request;
FIG. 6 is a flowchart of flow rate control processing in the vehicular air-conditioning apparatus provided with an adsorption heat pump related to the first embodiment;
FIG. 7 is a block diagram of a control system in a vehicular air-conditioning apparatus provided with an adsorption heat pump related to a third embodiment; and
FIG. 8 is a configuration view of a heat storage unit used for the vehicular air-conditioning apparatus provided with an adsorption heat pump related to a fifth embodiment.

DETAILED DESCRIPTION OF EMBODIMENTS

First Embodiment

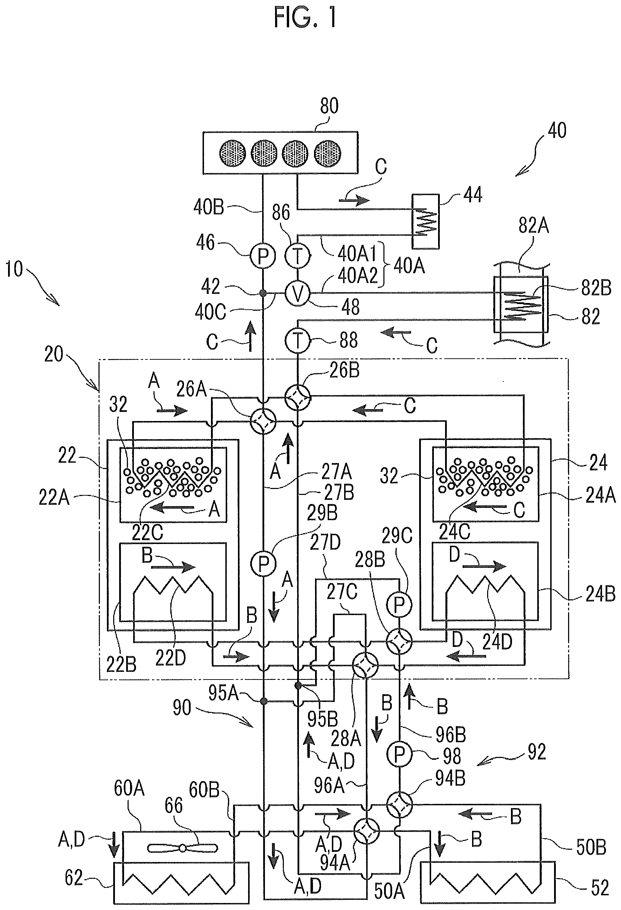

Hereinafter, a vehicular air-conditioning apparatus 10 provided with an adsorption heat pump (hereinafter referred to as a vehicular air-conditioning apparatus 10) related to the first embodiment will be described with reference to FIGS. 1 to 6. As illustrated in FIG. 1, the vehicular air-conditioning apparatus 10 is constituted as an air-conditioning apparatus provided with an adsorption heat pump 20. The vehicular air-conditioning apparatus 10 is provided with a first circulation circuit 40 as a "circulation path" for circulating a coolant between an engine 80 serving as an "internal combustion engine" and the adsorption heat pump 20 (specifically, an adsorption-desorption device of the container that performs a desorption process to be described below). Additionally, the vehicular air-conditioning apparatus 10 is provided with a second circulation circuit 90 for circulating the coolant between a heat source (specifically, the adsorption-desorption device of the container that performs an adsorption process to be described below and an evaporation-condensation device of the container that performs the desorption process) within the adsorption heat pump 20, and a first heat exchanger. Moreover, the vehicular air-conditioning apparatus 10 is provided with a third circulation circuit 92 for circulating the coolant between the adsorption heat pump 20 (specifically, the evaporation-condensation device of the container that performs the adsorption process to be described below), and a second heat exchanger.

A "high-temperature" coolant circulates in the first circulation circuit 40, a "low-temperature" coolant circulates in the second circulation circuit 90, and a "cool-temperature" coolant circulates in the third circulation circuit 92. Here, the "high-temperature" corresponds to a temperature (for example, about 90°C) at which the desorption process in the adsorption-desorption device (to be described below) is promoted. In the present embodiment, the coolant discharged from the engine 80 is warmed to the "high-temperature". Additionally, the "cool-temperature" corresponds to a temperature (for example, about 10°C) lower than an in-vehicle temperature. In the present embodiment, the coolant is cooled to the "cool-temperature" due to the evaporative latent heat of the refrigerant in the evaporation-condensation device. Moreover, the "low-temperature" corresponds to a temperature higher than outdoor air temperature between the "cool-temperature" and the "high-temperature" (for example, about 40°C). In the present embodiment, the coolant is warmed to the "low-temperature" due to the heat (adsorption heat, condensation heat) generated inside the adsorption heat pump 20.

At a cooling request and at dehumidification heating, the first heat exchanger corresponds to an outdoor heat exchanger 62, and the second heat exchanger corresponds to an indoor heat exchanger 52. Additionally, at a heating request, the first heat exchanger corresponds to the indoor heat exchanger 52, and the second heat exchanger corresponds to the outdoor heat exchanger 62. Hereinafter, the configuration of the vehicular air-conditioning apparatus 10 will be described.

Adsorption Heat Pump

The vehicular air-conditioning apparatus 10 of the present embodiment is configured to include the adsorption heat pump 20. The adsorption heat pump 20 is provided with a plurality of (two in the present embodiment) containers, the adsorption process is performed in a first container, and the desorption process is performed in a second container. That is, in the first container, the coolant cooled to the "cool-temperature" is obtained by adsorbing a refrigerant (water) with an adsorbent 32 and utilizing evaporative latent heat generated as the refrigerant evaporates with the adsorption of the refrigerant by the adsorbent 32. Additionally, in the second container, a refrigerant (water) is desorbed from the adsorbent 32 by heating the adsorbent 32 that has adsorbed the refrigerant (water). In the adsorption heat pump 20, the adsorption process and the desorption process are repeatedly performed in the adsorption-desorption device within each of the containers.

This will be specifically described below. The adsorption heat pump 20 is configured to include a first adsorption-desorption device 22A and a second adsorption-desorption device 24A serving as the "adsorption-desorption device", and a first evaporation-condensation device 22B and a second evaporation-condensation device 24B serving as the "evaporation-condensation device". The first adsorption-desorption device 22A and the first evaporation-condensation device 22B make a pair to constitute a first container 22 as a "container". The inside of the first container 22 is sealed. Additionally, the second adsorption-desorption device 24A and the second evaporation-condensation device 24B make a pair to constitute a second container 24 as a "container". The inside of the second container 24 is sealed.

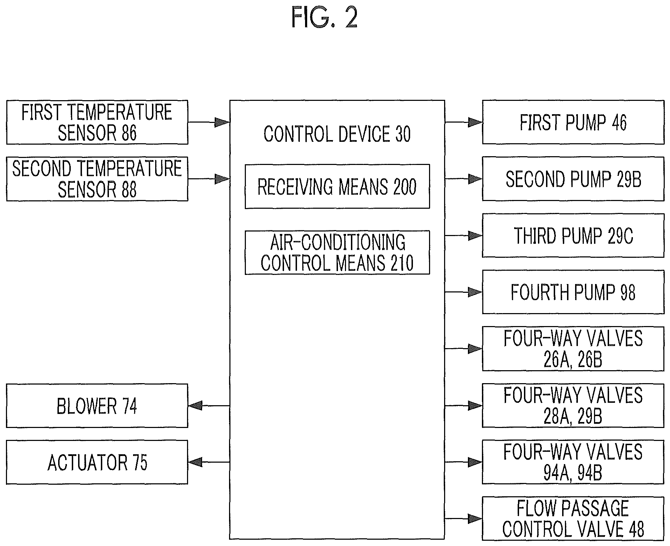

The adsorbent 32 is accommodated inside each of the first adsorption-desorption device 22A and the second adsorption-desorption device 24A. The adsorbent 32 is made of silica gel, zeolite, or the like (zeolite in the present embodiment). Additionally, a first adsorption core 22C (heat exchanger) is disposed inside the first adsorption-desorption device 22A, and the first adsorption core 22C is connected to four-way valves 26A, 26B. A control device 30 is electrically connected to the four-way valves 26A, 26B (refer to FIG. 2), and the switching control of the four-way valves 26A, 26B is performed by the control device 30. The first adsorption core 22C is connected to the first circulation circuit 40 or the second circulation circuit 90 (to be described below) by the four-way valves 26A, 26B.

Moreover, similar to the first adsorption-desorption device 22A, a second adsorption core 24C (heat exchanger) is disposed inside the second adsorption-desorption device 24A, and the second adsorption core 24C is connected to the four-way valves 26A, 26B and is connected to the first circulation circuit 40 or the second circulation circuit 90 (to be described below) by the four-way valves 26A, 26B. The coolant that flows through the first circulation circuit 40 or the second circulation circuit 90 is circulated within the first adsorption core 22C and the second adsorption core 24C.

Meanwhile, a refrigerant (cooling water in the present embodiment) is injected into the first evaporation-condensation device 22B and the second evaporation-condensation device 24B. Additionally, a first evaporation-condensation core 22D (heat exchanger) is disposed inside the first evaporation-condensation device 22B, and the first evaporation-condensation core 22D is connected to four-way valves 28A, 28B. The control device 30 is electrically connected to the four-way valves 28A, 28B (refer to FIG. 2), and the switching control of the four-way valves 28A, 28B is performed by the control device 30. The first evaporation-condensation core 22D is connected to the second circulation circuit 90 or the third circulation circuit 92 (to be described below) by the four-way valves 28A, 28B.

Moreover, similar to the first evaporation-condensation device 22B, a second evaporation-condensation core 24D (heat exchanger) is disposed inside the second evaporation-condensation device 24B, and the second evaporation-condensation core 24D is connected to the four-way valves 28A, 28B and is connected to the second circulation circuit 90 or the third circulation circuit 92 (to be described below) by the four-way valves 28A, 28B. The coolant that flows through the second circulation circuit 90 or the third circulation circuit 92 is circulated within the first evaporation-condensation core 22D and the second evaporation-condensation core 24D.

Meanwhile, the vehicular air-conditioning apparatus 10 is provided with four-way valves 94A, 94B as "switching valves" capable of switching the first heat exchanger to one of the indoor heat exchanger 52 and the outdoor heat exchanger 62 and switching the second heat exchanger to the other of the indoor heat exchanger 52 and the outdoor heat exchanger 62. The control device 30 is electrically connected to the four-way valves 94A, 94B (refer to FIG. 2), and the switching control of the four-way valves 94A, 94B is performed by the control device 30. The four-way valve 94A is coupled to the four-way valve 26A by a coupling pipe 27A and is coupled to the four-way valve 28A by a coupling pipe 96A. A second pump 29B for circulating the coolant is provided on the four-way valve 26A side of the coupling pipe 27A. Additionally, the four-way valve 94B is coupled to the four-way valve 26B by a coupling pipe 27B and is coupled to the four-way valve 28B by a coupling pipe 96B. A fourth pump 98 for circulating the coolant is provided at an intermediate part of the coupling pipe 96B.

The coupling pipe 27A branches at a downstream branching part 95A of the second pump 29B, and the branching part 95A and the four-way valve 28A are coupled together by a coupling pipe 27C. Additionally, the coupling pipe 27B branches at an intermediate branching part 95B, and the branching part 95B and the four-way valve 28B are coupled together by a coupling pipe 27D. A third pump 29C for circulating the coolant is provided at an intermediate part of the coupling pipe 27D.

First Circulation Circuit

The first circulation circuit 40 is configured as a circuit for connecting the engine 80 to the adsorption heat pump 20, specifically, the adsorption-desorption device (the first adsorption-desorption device 22A or the second adsorption-desorption device 24A, hereinafter abbreviated as "22A, 24A") of the container that performs the desorption process and for circulating the coolant between the engine 80 and the adsorption heat pump 20. The first circulation circuit 40 has an upstream pipe 40A that constitutes an upstream portion of the first circulation circuit 40, and a downstream pipe 40B that constitutes a downstream portion of the first circulation circuit 40. The upstream pipe 40A is connected to the four-way valve 26B, and the downstream pipe 40B is connected to the four-way valve 26A. The upstream pipe 40A is further constituted of a first upstream pipe 40A1 and a second upstream pipe 40A2. The first upstream pipe 40A1 and the second upstream pipe 40A2 are connected together in a flow passage control valve 48 (to be described below).

The followings are disposed in the first circulation circuit 40 (upstream pipe 40A) from the engine 80 to the adsorption-desorption device (22A, 24A) of the container that performs the desorption process. That is, in the first circulation circuit 40, a heater core 44, a first temperature sensor 86, the flow passage control valve 48, an exhaust heat recovery device 82, and a second temperature sensor 88 are disposed sequentially from the upstream side with the engine 80 as a starting point. In the above configuration, the heater core 44, which is included between the engine 80 and the flow passage control valve 48, and the first temperature sensor 86 are disposed in the first upstream pipe 40A1. Additionally, in the above configuration, the exhaust heat recovery device 82, which serves as a "heat supply device" included between the flow passage control valve 48 and the adsorption heat pump 20, and the second temperature sensor 88 are disposed in the second upstream pipe 40A2. In addition, a bypass flow passage 40C is provided toward a three-way branch pipe 42 provided in the downstream pipe 40B from the flow passage control valve 48. The bypass flow passage 40C is provided as a bypass that connects the upstream pipe 40A and the downstream pipe 40B together without passing through the adsorption heat pump 20. Additionally, a first pump 46 serving as a "pump" for circulating the coolant is provided in the first circulation circuit 40 (downstream pipe 40B) from the downstream of the three-way branch pipe 42 to the engine 80 downstream of the adsorption-desorption device (22A, 24A) of the container that performs the desorption process. Accordingly, a "high-temperature" coolant is supplied to the first adsorption-desorption device 22A (first adsorption core 22C) or the second adsorption-desorption device 24A (second adsorption core 24C), the desorption process is performed in the first adsorption-desorption device 22A or the second adsorption-desorption device 24A.

In addition, an electric water pump that operates electrically is adopted as the first pump 46 of the present embodiment. That is, the first pump 46 can circulate the coolant in the first circulation circuit 40 even in a case where the engine 80 has stopped. The first pump 46 is electrically connected to the control device 30 (refer to FIG. 2), and control of the first pump 46 is performed by the control device 30.

The heater core 44 constitutes a portion of an indoor air-conditioning unit 70. The indoor air-conditioning unit 70 will be described below.

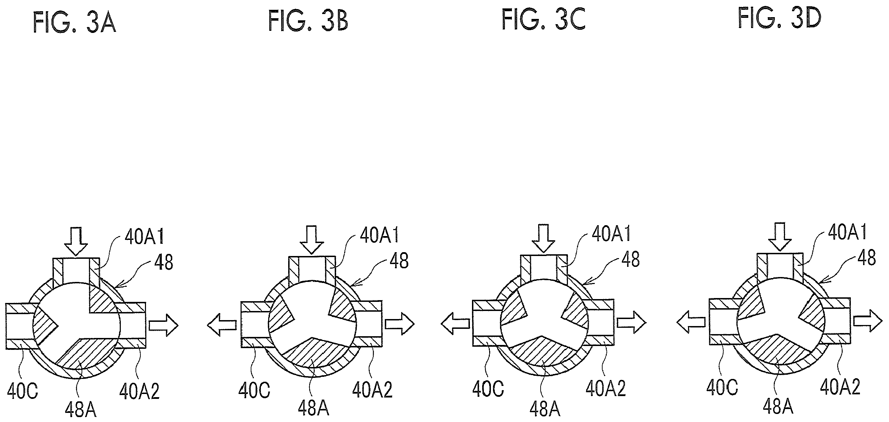

The flow passage control valve 48 is provided between the heater core 44 and the exhaust heat recovery device 82, specifically, between the engine 80 and the exhaust heat recovery device 82, in the first circulation circuit 40 and controls the coolant so that the coolant can be caused to bypass downstream of the adsorption-desorption device (22A, 24A) of the container that performs the desorption process. The flow passage control valve 48 is formed as a three-way valve that diverges the coolant flowing out of the first upstream pipe 40A1 into the second upstream pipe 40A2 and the bypass flow passage 40C. In detail, as illustrated in FIG. 3A to FIG. 3D, the flow passage control valve 48 is a rotary valve, and the ratio of the coolant flowing through the second upstream pipe 40A2 and the coolant flowing through the bypass flow passage 40C is adjusted depending on the position of valve 48A. The flow passage control valve 48 is electrically connected to the control device 30 (refer to FIG. 2), and the control of the flow passage control valve 48 is performed by the control device 30.

Here, as illustrated in FIG. 3A, a state where the valve 48A fully opens the second upstream pipe 40A2 side and closes the bypass flow passage 40C side is defined as "fully opened". Additionally, as illustrated in FIG. 3D, a state where the valve 48A opens the second upstream pipe 40A2 side to the minimum and opens the bypass flow passage 40C side to the maximum is defined as "slightly opened". In addition, in the present embodiment, a state where the valve 48A does not fully close the second upstream pipe 40A2 side and the minimum coolant needed for the operation of the vehicular air-conditioning apparatus 10 circulates through the first circulation circuit 40.

As illustrated in FIG. 3A, in a case where the position of the valve 48A is fully opened, in the first circulation circuit 40, a path leading from the engine 80 through the first upstream pipe 40A1 and the second upstream pipe 40A2 to the adsorption-desorption device (22A, 24A) of the container that performs the desorption process and returning to the engine 80 through the downstream pipe 40B is formed. Meanwhile, as illustrated in FIG. 3B to FIG. 3D, the following path is formed in a case where the bypass flow passage 40C side is opened excluding when the position of the valve 48A is fully opened. That is, in the first circulation circuit 40, the path leading from the engine 80 through the first upstream pipe 40A1 and the second upstream pipe 40A2 to the adsorption-desorption device (22A, 24A) of the container that performs the desorption process and returning to the engine 80 through the downstream pipe 40B is formed. Additionally, a path returning from the engine 80 through the first upstream pipe 40A1, the bypass flow passage 40C, and the downstream pipe 40B to the engine 80 are formed in the first circulation circuit 40.

The flow passage control valve 48 of the present embodiment operates as follows in a flow rate control (to be described below). That is, in the flow passage control valve 48, whenever a valve closing operation is performed, the valve 48A rotates toward the slightly opened side (refer to FIG. 3D) from the fully opened side (refer to FIG. 3A), and whenever a valve opening operation is performed, the valve 48A rotates toward the fully opened side (refer to FIG. 3A) from the slightly opened side (refer to FIG. 3D). As described above, in the flow passage control valve 48 of the present embodiment, the valve 48A is formed so as to rotate stepwise between the fully opened state and the slightly opened state.

The exhaust heat recovery device 82 recovers heat from the exhaust gas discharged from the engine 80. The exhaust heat recovery device 82 is configured to include an exhaust gas flow passage 82A, and an internal pipe 82B drawn into the exhaust gas flow passage 82A. The internal pipe 82B is provided in the middle of the second upstream pipe 40A2, and constitutes a portion of the first circulation circuit 40. With the above configuration, the coolant that flows through the internal pipe 82B is heated by the exhaust gas that flows through the exhaust gas flow passage 82A. That is, the heat of the exhaust gas is recovered by performing heat exchange between the exhaust gas and the coolant. In addition, the exhaust heat recovery device 82 is provided with a main flow passage (not illustrated) that allows the exhaust gas to pass therethrough without performing heat exchange with the coolant, separately from the exhaust gas flow passage 82A, and a switching valve (not illustrated) can perform switching between the exhaust gas flow passage 82A and the main flow passage. For example, the control device 30 can switch an exhaust gas flow passage according to the temperature of the coolant that flows through the internal pipe 82B.

The first temperature sensor 86 measures the temperature of the coolant in the circulation path upstream of the exhaust heat recovery device 82. Additionally, the second temperature sensor 88 measures the temperature of the coolant in the circulation path downstream of the exhaust heat recovery device 82. In other words, the second temperature sensor 88 measures the temperature of the coolant immediately before flowing into the adsorption-desorption device (22A, 24A) of the container that performs the desorption process. Here, the temperature of the coolant in the first temperature sensor 86 is defined as T1, and the temperature of the coolant in the second temperature sensor 88 is defined as T2.

Second Circulation Circuit

The second circulation circuit 90 is constituted as a circuit for connecting the heat source within the adsorption heat pump 20 and the first heat exchanger (the indoor heat exchanger 52 or the outdoor heat exchanger 62) together and for circulating a coolant between the heat source within the adsorption heat pump 20 and the first heat exchanger. Here, the "heat source within the adsorption heat pump 20" corresponds to the adsorption-desorption device (the first adsorption-desorption device 22A or the second adsorption-desorption device 24A, hereinafter abbreviated as "22A, 24A") of the container that performs the adsorption process in which the adsorption heat is generated, and corresponds to the evaporation-condensation device (the first evaporation-condensation device 22B or the second evaporation-condensation device 24B, hereinafter abbreviated as "22B, 24B") of the container that performs the desorption process in which the condensation heat is generated. Additionally, the "adsorption heat" is the heat that is generated as the adsorbent 32 adsorbs the refrigerant in the container that performs the adsorption process. Additionally the "condensation heat" is the heat that is generated as the refrigerant condenses in the container that performs the desorption process.

The second circulation circuit 90 is a circuit obtained by combining a circuit that leads from the adsorption-desorption device (22A, 24A) of the container, which performs the adsorption process, via the second pump 29B to the first heat exchanger and leads to the adsorption-desorption device (22A, 24A) of the container that performs the adsorption process again, and a circuit that leads from the evaporation-condensation device (22B, 24B) of the container, which performs the desorption process, to the first heat exchanger and leads to the evaporation-condensation device (22B, 24B) of the container, which performs the desorption process again, via the third pump 29C. That is, the second circulation circuit 90 is a circuit through which the "low-temperature" coolant warmed due to the adsorption heat and the condensation heat circulates.

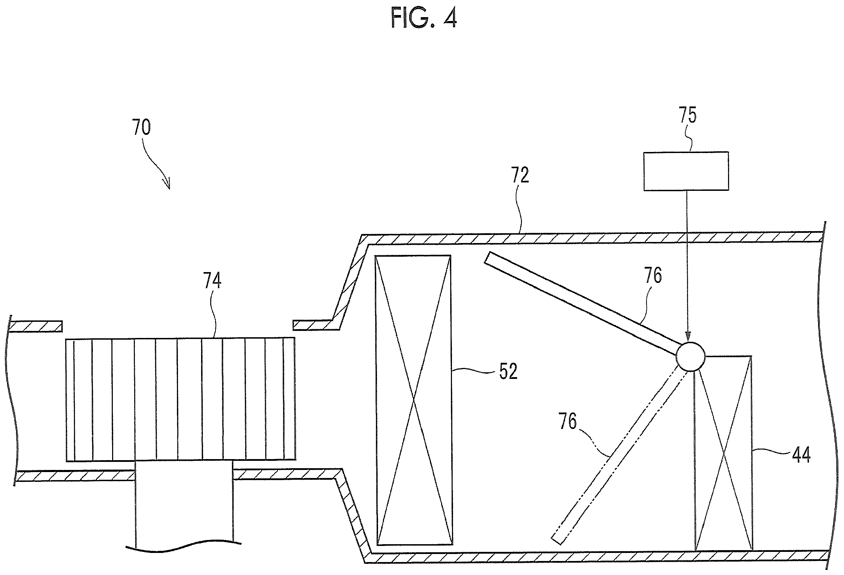

Here, the first heat exchanger corresponds to any of the indoor heat exchanger 52 and the outdoor heat exchanger 62. In detail, the first heat exchanger corresponds to the outdoor heat exchanger 62 at a cooling request and at dehumidification heating, and corresponds to the indoor heat exchanger 52 at a heating request. The indoor heat exchanger 52 constitutes a portion of the indoor air-conditioning unit 70 (to be described below), and is constituted as a heat exchanger provided within a vehicle cabin (refer to FIG. 4). Additionally, as illustrated in FIG. 1, the indoor heat exchanger 52 is coupled to the four-way valve 94A by an upstream pipe 50A on an upstream side of the indoor heat exchanger 52, and is coupled to the four-way valve 94B by a downstream pipe 50B on a downstream side of the indoor heat exchanger 52. Meanwhile, the outdoor heat exchanger 62 is disposed at a front end part of an engine compartment of a vehicle, and is constituted as a heat exchanger different from a radiator for cooling an engine. Additionally, the outdoor heat exchanger 62 is coupled to the four-way valve 94A by an upstream pipe 60A on an upstream side of the outdoor heat exchanger 62, and is coupled to the four-way valve 94B by a downstream pipe 60B on a downstream side of the outdoor heat exchanger 62. Moreover, the outdoor heat exchanger 62 is provided with a fan 66. By rotationally driving the fan 66, heat exchange can be forcibly performed. In addition, switching of whether the first heat exchanger is made to correspond to any of the indoor heat exchanger 52 and the outdoor heat exchanger 62, in other words, whether any of the indoor heat exchanger 52 and the outdoor heat exchanger 62 is connected to the second circulation circuit 90 is performed by the four-way valves 94A, 94B.

As described above, in the vehicular air-conditioning apparatus 10 of the present embodiment, low-temperature heat is radiated in the outdoor heat exchanger 62 serving as the first heat exchanger at a cooling request and at dehumidification heating, and low-temperature heat is radiated in the indoor heat exchanger 52 serving as the first heat exchanger at a heating request.

Third Circulation Circuit

The third circulation circuit 92 is configured as a circuit for connecting the adsorption heat pump 20, specifically, the evaporation-condensation device (the first evaporation-condensation device 22B or the second evaporation-condensation device 24B, hereinafter abbreviated as "22B, 24B") of the container, which performs the adsorption process, to the second heat exchanger (the indoor heat exchanger 52 or the outdoor heat exchanger 62) and for circulating the coolant between the adsorption heat pump 20 and the second heat exchanger. In detail, the third circulation circuit 92 is a circuit that leads from the evaporation-condensation device (22B, 24B) of the container that performs the adsorption process to the second heat exchanger and leads to the evaporation-condensation device (22B, 24B) of the container, which performs the adsorption process again, via the fourth pump 98. That is, the third circulation circuit 92 is a circuit through which the coolant set to the "cool-temperature" in the evaporation-condensation device (22B, 24B) of the container that performs the adsorption process circulates.

The second heat exchanger corresponds to any of the indoor heat exchanger 52 and the outdoor heat exchanger 62. In detail, the second heat exchanger corresponds to the indoor heat exchanger 52 at a cooling request and at dehumidification heating, and corresponds to the outdoor heat exchanger 62 at a heating request. In addition, switching of whether the second heat exchanger is made to correspond to any of the indoor heat exchanger 52 and the outdoor heat exchanger 62, in other words, whether any of the indoor heat exchanger 52 and the outdoor heat exchanger 62 is connected to the third circulation circuit 92 is performed by the four-way valves 94A, 94B.

As described above, in the vehicular air-conditioning apparatus 10 of the present embodiment, heat is adsorbed in the indoor heat exchanger 52 serving as the second heat exchanger at a cooling request and at dehumidification heating, and heat is adsorbed in the outdoor heat exchanger 62 serving as the first heat exchanger at a heating request.

Indoor Air-Conditioning Unit

As illustrated in FIG. 4, the indoor air-conditioning unit 70 has a ventilation duct 72. An air intake port for introducing outdoor air and an air intake port for introducing indoor air, which are not illustrated, are provided on an upstream side of the ventilation duct 72. Additionally, a blower 74 provided with a blower fan is provided on the upstream side of the ventilation duct 72 within the ventilation duct 72, and the air introduced into the ventilation duct 72 from the air intake port or the air intake port is blown to a downstream side of the ventilation duct 72 by the blower 74.

Additionally, the indoor heat exchanger 52 for dehumidifying and cooling introduced air and the heater core 44 for heating introduced air are provided on a downstream side with respect to the blower 74 within the ventilation duct 72. An air mix damper 76 is formed so as to be rotationally moved by an actuator 75. Here, by rotationally moving the air mix damper 76 to a state illustrated by a two-dot chain line in FIG. 4, the ventilation duct 72 can be a first passage that allows the air, which has passed through the indoor heat exchanger 52, to flow therethrough. On the other hand, by rotationally moving the air mix damper 76 to a state illustrated by a solid line in FIG. 4, the ventilation duct 72 can be a second passage that allows the air, which has passed through the indoor heat exchanger 52 and heater core 44, to flow therethrough. In this way, in the indoor air-conditioning unit 70, the ratio of the air passing through the first passage and the air passing through the second passage can be changed by adjusting the rotational position of the air mix damper 76. The air of which the temperature has been adjusted by the air mix damper 76 flows into the downstream side of the ventilation duct 72 and is blown into the vehicle cabin.

Control System

Next, a control system of the vehicular air-conditioning apparatus 10 will be described with reference to FIG. 2. The vehicular air-conditioning apparatus 10 of the present embodiment is controlled by the control device 30. The control device 30 is constituted of an electronic control unit (ECU) that is a microcomputer including a central processing unit (CPU), a read-only memory (ROM), and a random access memory (RAM). In addition, the control device 30 is not limited to a case where the control device is constituted of one ECU, and may be constituted by combining a plurality of the ECUs. The first temperature sensor 86 and the second temperature sensor 88, which are temperature sensors provided within the first circulation circuit 40, are electrically connected to the control device 30. Additionally, the first pump 46, the second pump 29B, the third pump 29C, the fourth pump 98, the four-way valves 26A, 26B, the four-way valves 28A, 28B, the four-way valves 94A, 94B, the flow passage control valve 48, the blower 74, and the actuator 75, which are provided in the vehicular air-conditioning apparatus 10, are electrically connected to the control device 30.
Moreover, the control device 30 is provided with receiving means 200 and air-conditioning control means 210. Hereinafter, the means will be described in detail.
The receiving means 200 receives an operation related to the vehicular air-conditioning apparatus 10 performed by an occupant. For example, as the occupant operates the touch panel that is not illustrated, the receiving means 200 receives an operation/stop request, a cooling request, a heating request, a dehumidification request, an air amount change request, and the like for the vehicular air-conditioning apparatus 10.
The air-conditioning control means 210 controls the vehicular air-conditioning apparatus 10 with respect to a request that the receiving means 200 has received. For example, the air-conditioning control means 210 controls the first pump 46, the second pump 29B, the third pump 29C, and the fourth pump 98 according to the operation/stop request. Additionally, the air-conditioning control means 210 performs the switching control of the four-way valves 26A, 26B, the four-way valves 28A, 28B, and the four-way valves 94A, 94B in order to perform exchange between the adsorption process and the desorption process in the first container 22 and the second container 24 and switching between cooling and heating. Additionally, the air-conditioning control means 210 receives a cooling request, a heating request, or a dehumidification request to control the actuator 75 or controls the blower 74 according to an air amount change request.
Moreover, the air-conditioning control means 210 controls the flow passage control valve 48 according to a temperature T1 of the coolant measured by the first temperature sensor 86 or to a temperature T2 of the coolant measured by the second temperature sensor 88, and adjusts the flow rate of the coolant that flows into the adsorption-desorption device (22A, 24A) of the container that performs the desorption process.

Working Effects

Next, the working and effects of the vehicular air-conditioning apparatus 10 of the present embodiment will be described.

Normal Control

First, normal control in the vehicular air-conditioning apparatus 10 of the present embodiment will be described. Here, the "normal control" is control in which the warming-up of the engine 80 has been completed and the temperature of the coolant in the first circulation circuit 40 has reached a temperature needed for desorbing the water that is a refrigerant, in the adsorption-desorption device (22A, 24A) of the container that performs the desorption process. In addition, in the present embodiment, a case where the temperature T1 of the coolant is equal to or higher than 90°C set as a specified value is assumed as the case where the warming-up of the engine 80 has been completed. Additionally, in the present embodiment, a case where the temperature T2 of the coolant is equal to or higher than 105°C set as a predetermined value is assumed as the temperature needed for desorbing the water that is the refrigerant.

At Cooling Request and At Dehumidification Heating

At a cooling request and at dehumidification heating, the control device 30 controls the four-way valves 26A, 26B, the four-way valves 28A, 28B, and the four-way valves 94A, 94B, thereby connecting the adsorption-desorption device (22A, 24A) of the container, which performs the adsorption process, to the second circulation circuit 90, and connecting the evaporation-condensation device (22B, 24B) of the container, which performs the adsorption process, to the third circulation circuit 92. Meanwhile, the adsorption-desorption device (22A, 24A) of the container that performs a desorption process is connected to the first circulation circuit 40, and the evaporation-condensation device (22B, 24B) of the container that performs the desorption process is connected to the second circulation circuit 90. Then, as the control device 30 repeatedly performs the switching control of the four-way valves 26A, 26B and the four-way valves 28A, 28B, in the adsorption heat pump 20, the adsorption process and the desorption process are repeatedly performed in the adsorption-desorption device within each container.

Specifically, as illustrated in FIG. 1, the outdoor heat exchanger 62 is connected to the second circulation circuit 90 by the four-way valves 94A, 94B, and the indoor heat exchanger 52 is connected to the third circulation circuit 92 by the four-way valves 94A, 94B.

Next, as illustrated in FIG. 1, it is assumed that the adsorption process is performed in the first container 22 and the desorption process is performed in the second container 24. First, the first adsorption core 22C is connected to the second circulation circuit 90 by the four-way valves 26A, 26B. Accordingly, a path of circulating through the first adsorption core 22C and the outdoor heat exchanger 62 is formed (refer to arrow A of FIG. 1). Additionally, the first evaporation-condensation core 22D is connected to the third circulation circuit 92 by the four-way valves 28A, 28B. Accordingly, a path of circulating through the first evaporation-condensation core 22D and the indoor heat exchanger 52 is formed (refer to arrow B of FIG. 1). Additionally, the second adsorption core 24C is connected to the first circulation circuit 40 by the four-way valves 26A, 26B. Accordingly, a path of circulating through the second adsorption core 24C and the first circulation circuit 40 (engine 80) is formed (refer to arrow C of FIG. 1). Moreover, the second evaporation-condensation core 24D is connected to the second circulation circuit 90 by the four-way valves 28A, 28B. Accordingly, a path of circulating through the second evaporation-condensation core 24D and the outdoor heat exchanger 62 is formed (refer to arrow D of FIG. 1). In addition, in the outdoor heat exchanger 62, the circulation (refer to arrow A of FIG. 1) of the first adsorption core 22C and the circulation (refer to arrow D of FIG. 1) of the second evaporation-condensation core 24D join together.

Then, the adsorption process is performed in the first container 22. That is, in the first container 22, the dried adsorbent 32 adsorbs the refrigerant, and the refrigerant of the first evaporation-condensation device 22B is evaporated by reducing the pressure in the first container 22. In this case, the coolant within the first evaporation-condensation core 22D is cooled by the evaporative latent heat of the refrigerant. Accordingly, the coolant that flows through the third circulation circuit 92 is cooled to the "cool-temperature" and is supplied to the indoor heat exchanger 52. Additionally, in the first adsorption-desorption device 22A, the coolant within the first adsorption core 22C is warmed to the "low-temperature" by the adsorption heat generated as the adsorbent 32 adsorbs the refrigerant. Then, the coolant warmed within the first adsorption core 22C is supplied to the outdoor heat exchanger 62 by the second circulation circuit 90.

Meanwhile, the desorption process is performed in the second container 24. That is, since the second adsorption core 24C is connected to the first circulation circuit 40 by the four-way valves 26A, 26B, the "high-temperature" coolant heats the adsorbent 32 within the second adsorption-desorption device 24A via the second adsorption core 24C. Accordingly, the adsorbent 32 within the second adsorption-desorption device 24A is dried, and the refrigerant is desorbed from the adsorbent 32. Then, in the second evaporation-condensation device 24B (second evaporation-condensation core 24D) connected to the second circulation circuit 90, the refrigerant desorbed from the adsorbent 32 is condensed and is restored as water. Then, the coolant within the second evaporation-condensation core 24D is warmed to "low-temperature" by the condensation heat generated in this case. Then, the coolant warmed within the second evaporation-condensation core 24D is supplied to the outdoor heat exchanger 62 by the second circulation circuit 90.

In the vehicular air-conditioning apparatus 10 of the present embodiment, the four-way valves 26A, 26B and the four-way valves 28A, 28B are switched by the control of the control device 30 after the adsorption process in the first container 22 and after the desorption process in the second container 24. Accordingly, the first container 22 is switched from the adsorption process to the desorption process, and the second container 24 is switched from the desorption process to the adsorption process. Specifically, although illustration is omitted, the first adsorption core 22C is connected to the first circulation circuit 40 by the four-way valves 26A, 26B, and the first evaporation-condensation core 22D is connected to the second circulation circuit 90 by the four-way valves 28A, 28B. Meanwhile, the second adsorption core 24C is connected to the second circulation circuit 90 by the four-way valves 26A, 26B, and the second evaporation-condensation core 24D is connected to the third circulation circuit 92 by the four-way valves 28A, 28B. As described above, in each of the first adsorption-desorption device 22A and the second adsorption-desorption device 24A, the adsorption process and the desorption process are repeatedly performed, and the "cool-temperature" coolant is supplied to the indoor heat exchanger 52.

Meanwhile, in the indoor air-conditioning unit 70, as illustrated in FIG. 4, the ratio of the cool air that has passed through the indoor heat exchanger 52, and the warm air that has passed through the heater core 44 is adjusted by adjusting the rotational position of the air mix damper 76. That is, the air that passes through the ventilation duct 72 is adjusted to a desired temperature, and is blown into the vehicle cabin. In addition, the air introduced into the ventilation duct 72 is subjected to moisture removal by being cooled to the dew point temperature in the indoor heat exchanger 52 and is subjected to dehumidification by being heated in the heater core 44.

At Heating Request

At a heating request, the control device 30 controls the four-way valves 26A, 26B, the four-way valves 28A, 28B, and the four-way valves 94A, 94B, thereby connecting the adsorption-desorption device (22A, 24A) of the container, which performs the adsorption process, to the second circulation circuit 90, and connecting the evaporation-condensation device (22B, 24B) of the container, which performs the adsorption process, to the third circulation circuit 92. Meanwhile, the adsorption-desorption device (22A, 24A) of the container that performs a desorption process is connected to the first circulation circuit 40, and the evaporation-condensation device (22B, 24B) of the container that performs the desorption process is connected to the second circulation circuit 90. Then, as the control device 30 repeatedly performs the switching control of the four-way valves 26A, 26B and the four-way valves 28A, 28B, in the adsorption heat pump 20, the adsorption process and the desorption process are repeatedly performed in the adsorption-desorption device within each container.

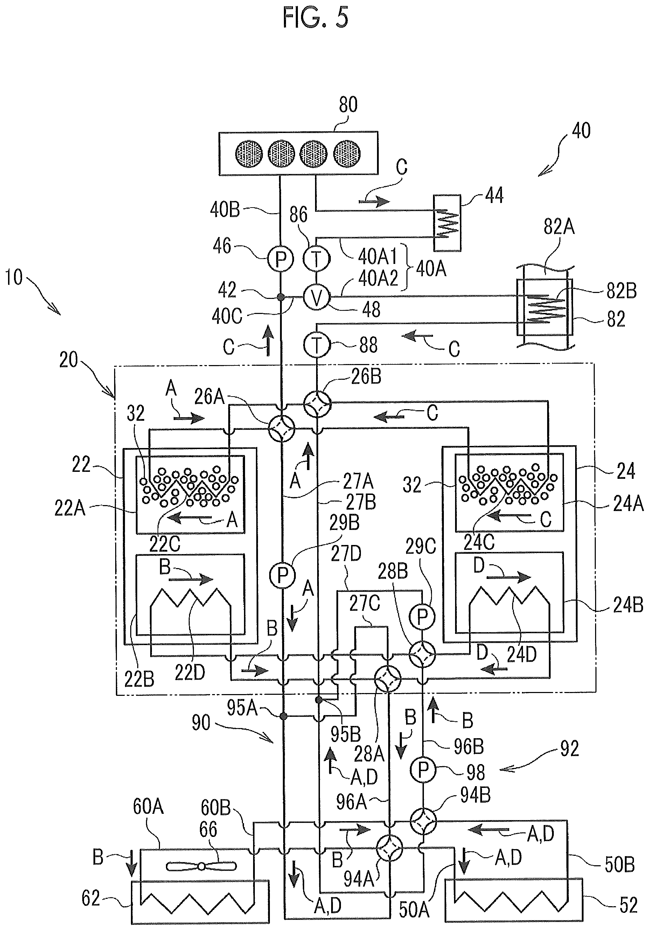

Specifically, as illustrated in FIG. 5, the outdoor heat exchanger 62 is connected to the third circulation circuit 92 by the four-way valves 94A, 94B, and the indoor heat exchanger 52 is connected to the second circulation circuit 90 by the four-way valves 94A, 94B.

Next, as illustrated in FIG. 5, it is assumed that the adsorption process is performed in the first container 22 and the desorption process is performed in the second container 24. First, the first adsorption core 22C is connected to the second circulation circuit 90 by the four-way valves 26A, 26B. Accordingly, a path of circulating through the first adsorption core 22C and the indoor heat exchanger 52 is formed (refer to arrow A of FIG. 5). Additionally, the first evaporation-condensation core 22D is connected to the third circulation circuit 92 by the four-way valves 28A, 28B. Accordingly, a path of circulating through the first evaporation-condensation core 22D and the outdoor heat exchanger 62 is formed (refer to arrow B of FIG. 5). Additionally, the second adsorption core 24C is connected to the first circulation circuit 40 by the four-way valves 26A, 26B. Accordingly, a path of circulating through the second adsorption core 24C and the first circulation circuit 40 (engine 80) is formed (refer to arrow C of FIG. 5). Moreover, the second evaporation-condensation core 24D is connected to the second circulation circuit 90 by the four-way valves 28A, 28B. Accordingly, a path of circulating through the second evaporation-condensation core 24D and the indoor heat exchanger 52 is formed (refer to arrow D of FIG. 5). In addition, in the indoor heat exchanger 52, the circulation (refer to arrow A of FIG. 5) of the first adsorption core 22C and the circulation (refer to arrow D of FIG. 5) of the second evaporation-condensation core 24D join together.

Then, the adsorption process is performed in the first container 22. That is, in the first container 22, the dried adsorbent 32 adsorbs the refrigerant, and the refrigerant of the first evaporation-condensation device 22B is evaporated by reducing the pressure in the first container 22. In this case, the coolant within the first evaporation-condensation core 22D is cooled by the evaporative latent heat of the refrigerant. Accordingly, the coolant that flows through the third circulation circuit 92 is cooled to the "cool-temperature" and is supplied to the outdoor heat exchanger 62. Additionally, in the first adsorption-desorption device 22A, the coolant within the first adsorption core 22C is warmed to the "low-temperature" by the adsorption heat generated as the adsorbent 32 adsorbs the refrigerant. Then, the coolant warmed within the first adsorption core 22C is supplied to the indoor heat exchanger 52 by the second circulation circuit 90.

Meanwhile, the desorption process is performed in the second container 24. That is, since the second adsorption core 24C is connected to the first circulation circuit 40 by the four-way valves 26A, 26B, the "high-temperature" coolant heats the adsorbent 32 within the second adsorption-desorption device 24A via the second adsorption core 24C. Accordingly, the adsorbent 32 within the second adsorption-desorption device 24A is dried, and the refrigerant is desorbed from the adsorbent 32. Then, in the second evaporation-condensation device 24B (second evaporation-condensation core 24D) connected to the second circulation circuit 90, the refrigerant desorbed from the adsorbent 32 is condensed and is restored as water. Then, the coolant within the second evaporation-condensation core 24D is warmed to "low-temperature" by the condensation heat generated in this case. Then, the coolant warmed within the second evaporation-condensation core 24D is supplied to the indoor heat exchanger 52 by the second circulation circuit 90.

J In the vehicular air-conditioning apparatus 10 of the present embodiment, the four-way valves 26A, 26B and the four-way valves 28A, 28B are switched by the control of the control device 30 after the adsorption process in the first container 22 and after the desorption process in the second container 24. Accordingly, the first container 22 is switched from the adsorption process to the desorption process, and the second container 24 is switched from the desorption process to the adsorption process. Specifically, although illustration is omitted, the first adsorption core 22C is connected to the first circulation circuit 40 by the four-way valves 26A, 26B, and the first evaporation-condensation core 22D is connected to the second circulation circuit 90 by the four-way valves 28A, 28B. Meanwhile, the second adsorption core 24C is connected to the second circulation circuit 90 by the four-way valves 26A, 26B, and the second evaporation-condensation core 24D is connected to the third circulation circuit 92 by the four-way valves 28A, 28B. As described above, in each of the first adsorption-desorption device 22A and the second adsorption-desorption device 24A, the adsorption process and the desorption process are repeatedly performed, and the warmed coolant is supplied to the indoor heat exchanger 52.

Meanwhile, in the indoor air-conditioning unit 70, by setting the rotational position of the air mix damper 76 to the second passage (refer to a solid line in FIG. 4), the adsorption heat and the condensation heat can be received from the indoor heat exchanger 52 as well as from the heater core 44.

Flow Rate Control

Next, flow rate control processing related to the flow rate control in the vehicular air-conditioning apparatus 10 of the present embodiment will be described. Here, the "flow rate control" is control in the case of cold time in which the warming-up of the engine 80 has not been completed or in the case where the temperature of the coolant in the first circulation circuit 40 has not reached a temperature needed for desorbing the water that is a refrigerant, in the adsorption-desorption device (22A, 24A) of the container that performs the desorption process.

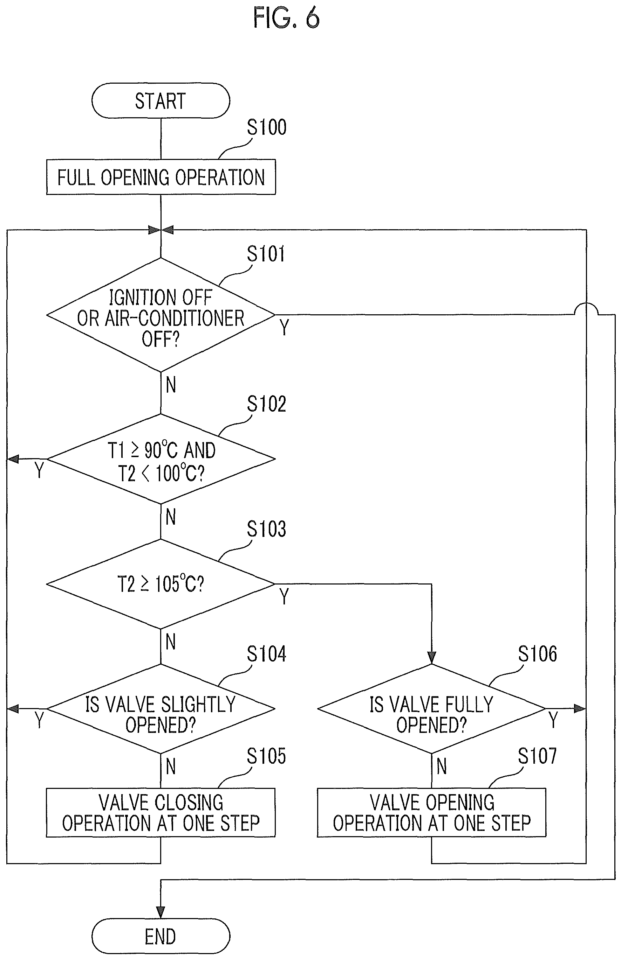

Hereinafter, the flow rate control processing executed by the air-conditioning control means 210 of the control device 30 will be described with reference to a flowchart of FIG. 6. First, when the operation of the vehicular air-conditioning apparatus 10 is started, in Step S100, the air-conditioning control means 210 operates the flow passage control valve 48 such that the position of the valve 48A is fully opened (refer to FIG. 3A). Then, the processing proceeds to the next Step S101.

In Step S101, the air-conditioning control means 210 determines whether or not an ignition is OFF or a power source of the vehicular air-conditioning apparatus 10 is OFF. In a case where the air-conditioning control means 210 determines that the ignition OFF or the power source of the vehicular air-conditioning apparatus 10 is OFF, the flow rate control processing is ended. On the other hand, in a case where the air-conditioning control means 210 determines the ignition is not OFF or the power source of the vehicular air-conditioning apparatus 10 is not OFF, that is, in a case where the ignition is ON and the power source of the vehicular air-conditioning apparatus 10 is ON, the processing proceeds to the next Step S102.

In Step S102, the air-conditioning control means 210 performs temperature determination based on the temperature T1 of the coolant in the first temperature sensor 86 and the temperature T2 of the coolant in the second temperature sensor 88. Specifically, the air-conditioning control means 210 determines whether or not T1 is equal to or higher than 90°C and T2 is lower than 100°C. In a case where the air-conditioning control means 210 determines that T1 is equal to or higher than 90°C and T2 is lower than 100°C, Step S101 is executed again. On the other hand, in a case where the air-conditioning control means 210 determines that T1 is not equal to or higher than 90°C and T2 is not lower than 100°C, that is, T1 is lower than 90°C and T2 is equal to or higher than 100°C, the processing proceeds to the next Step S103.

In Step S103, the air-conditioning control means 210 performs temperature determination based on the temperature T2 of the coolant in the second temperature sensor 88. Specifically, the air-conditioning control means 210 determines whether or not T2 is equal to or higher than 105°C. In a case where the air-conditioning control means 210 determines that T2 is equal to or higher than 105°C, the processing proceeds to Step S106. On the other hand, in a case where the air-conditioning control means 210 determines that T2 is not equal to or higher than 105°C, the processing proceeds to the next Step S104.

In Step S104, the air-conditioning control means 210 determines whether or not the position of the valve 48A is slightly opened. In a case where the air-conditioning control means 210 determines that the position of the valve 48A is not slightly opened, the processing proceeds to the next Step S105. On the other hand, in a case where the air-conditioning control means 210 determines that the position of the valve 48A is slightly opened, that is, in a case where the position of the valve 48A is slightly opened, the processing returns to Step S101.

In Step S105, the air-conditioning control means 210 operates the valve 48A so as to close the second upstream pipe 40A2 at one step. As described above, through the processing of Step S104 and Step S105, a valve closing operation is stepwise performed before the position of the valve 48A is slightly opened. Then, the processing returns to Step S101.

On the other hand, in a case where the air-conditioning control means 210 determines that T2 is equal to or higher than 105°C in Step S103, in Step S106, the air-conditioning control means 210 determines whether or not the position of the valve 48A is fully opened. In a case where the air-conditioning control means 210 determines that the position of the valve 48A is not fully opened, the processing proceeds to the next Step S107. On the other hand, in a case where the air-conditioning control means 210 determines that the position of the valve 48A is fully opened, that is, in a case where the position of the valve 48A is fully opened, the processing returns to Step S101.

In Step S107, the air-conditioning control means 210 operates the valve 48A so as to open the second upstream pipe 40A2 at one step. As described above, through the processing of Step S106 and Step S107, a valve opening operation is stepwise performed before the position of the valve 48A is fully opened. Then, the processing returns to Step S101.

Conclusion

As described above, according to the vehicular air-conditioning apparatus 10 of the present embodiment, switching can be performed between cooling operation (dehumidification operation) and heating operation by switching the four-way valves 94A, 94B. Also, the vehicular air-conditioning apparatus 10 of the present embodiment can simultaneously switch the four-way valves 26A, 26B, and the four-way valves 28A, 28B to continuously exchange the adsorption process of one of the first container 22 and the second container 24 with the desorption process of the other of the first container 22 and the second container 24 to continuously perform the cooling operation (dehumidification operation) or the heating operation. In addition, in the present embodiment, there is always no need for providing the four-way valves 94A, 94B. In this case, the cooling operation (dehumidification operation) and the heating operation can be switched by switching solely the four-way valves 28A, 28B among the four-way valves 26A, 26B and the four-way valves 28A, 28B.

Here, generally, the output of an adsorption heat pump is proportional to a difference between the amount of adsorption of an adsorbent at adsorption and the amount of adsorption of the adsorbent at desorption. Hence, in order to raise the output of the adsorption heat pump, there is a need for reducing the amount of adsorption at desorption to further increase the difference between the amounts of adsorption at adsorption and at desorption. Meanwhile, the amount of adsorption of the adsorbent increases with a rise in relative steam pressure within a container (pressure in the container with respect to saturated steam pressure). Hence, in order to reduce the amount of adsorption at desorption, it is advisable to raise the temperature of the adsorbent at desorption to drop the relative steam pressure. To summarize the above, in order to raise the output of adsorption heat pump, it can be said that it is effective to make the temperature of the adsorbent high, that is, raise the temperature of the coolant that flows into the adsorption-desorption device (22A, 24A) of the container that performs the desorption process, in light of the present embodiment.

On the other hand, the following problems may occur in the vehicular air-conditioning apparatus provided with an adsorption heat pump of the type of heating vehicle cabin air using engine waste heat as in the present embodiment. That is, in the vehicular air-conditioning apparatus 10, when vehicle fuel efficiency is improved, fuel consumption rate per traveling distance decreases, and the waste heat of the engine 80 tends to be insufficient. For that reason, the high-temperature heat source needed for the desorption process cannot be obtained when the engine 80 is cold, such as at the starting of the engine 80. Thus, in the vehicular air-conditioning apparatus 10 of the present embodiment, the exhaust heat recovery device 82 compensates for the heat that is insufficient in the engine 80 by providing the exhaust heat recovery device 82 between the heater core 44 and the adsorption-desorption device (22A, 24A) of the container that performs the desorption process. Additionally, the exhaust heat recovery device 82 can re-raise the temperature of the coolant, which has fallen, in a case where, due to the dehumidification operation or heating operation, the amount of heat dissipation in the heater core 44 is large and the temperature of the coolant falls greatly.

Additionally, the present embodiment has a feature in that, in a case where the high-temperature heat source needed for the desorption process is insufficient, the air-conditioning control means 210 provided in the control device 30 performs the flow rate control processing of reducing the flow rate of the coolant, which flows into the adsorption-desorption device (22A, 24A) of the container that performs the desorption process, to be below a predetermined flow rate. Here, whether or not the high-temperature heat source needed for the desorption process is insufficient can be determined as whether T2 has reached a predetermined value with reference to the temperature T2 of the second temperature sensor 88, that is, the temperature of the coolant immediately before flowing into the adsorption-desorption device (22A, 24A) of the container that performs the adsorption process. In the present embodiment, the predetermined value is set to 105°C, and when T2 is lower than 105°C, the air-conditioning control means 210 stepwise closes the flow passage control valve 48 to reduce the flow rate of the coolant, which flows into the adsorption-desorption device (22A, 24A) of the container that performs the desorption process, to be below the predetermined flow rate. Accordingly, since the temperature of the coolant rises at an earlier stage due to the heat received from the engine 80 or the exhaust heat recovery device 82, the high-temperature heat source needed for the desorption process can be secured at an earlier stage. On the other hand, when T2 is equal to or higher than 105°C, the air-conditioning control means 210 stepwise opens the flow passage control valve 48 to return the flow rate of the coolant, which flows into the adsorption-desorption device (22A, 24A) of the container that performs the desorption process, to the predetermined flow rate. Accordingly, the high-temperature heat source can be continuously supplied to the adsorption-desorption device (22A, 24A) of the container that performs the desorption process to improve cooling performance.

Additionally, whether or not the high-temperature heat source needed for the desorption process is insufficient can be determined as whether T1 has reached the specified value with reference to the temperature T1 of the first temperature sensor 86, that is, the temperature of the coolant that has flowed out of the heater core 44 in addition to the temperature of the second temperature sensor 88. In the present embodiment, the specified value is set to 90°C, and when T1 is lower than 90°C, the air-conditioning control means 210 can stepwise close the flow passage control valve 48 to reduce the flow rate of the coolant, which flows into the adsorption-desorption device (22A, 24A) of the container that performs the desorption process, to be below the predetermined flow rate. Accordingly, since the temperature of the coolant rises at an earlier stage due to the heat received from the exhaust heat recovery device 82, the high-temperature heat source needed for the desorption process can be secured at an earlier stage. On the other hand, when T1 is equal to or higher than 90°C, the air-conditioning control means 210 can stepwise open the flow passage control valve 48 to return the flow rate of the coolant, which flows into the adsorption-desorption device (22A, 24A) of the container that performs the desorption process, to the predetermined flow rate. Accordingly, the high-temperature heat source can be continuously supplied to the adsorption-desorption device (22A, 24A) of the container that performs the desorption process to improve cooling performance.

Moreover, the present embodiment has the flow passage control valve 48 that is provided between the engine 80 and the exhaust heat recovery device 82 in the first circulation circuit 40 and controls the coolant so that the coolant can be caused to bypass downstream of the adsorption-desorption device (22A, 24A) of the container that performs the desorption process. The flow passage control valve 48 is controlled by the air-conditioning control means 210, and in a case where the high-temperature heat source needed for the desorption process is insufficient, the flow rate to the bypass flow passage 40C that is a bypass is increased to reduce the flow rate of the coolant, which flows into the adsorption-desorption device (22A, 24A) of the container that performs the desorption process, to be below the predetermined flow rate. Accordingly, since the coolant that has flowed out of the engine 80 returns to the engine 80 through the bypass flow passage 40C before flowing into the adsorption-desorption device (22A, 24A) of the container that performs the desorption process, the temperature of the coolant can be raised at an earlier stage.

In addition, in the present embodiment, the air-conditioning control means 210 provided in the control device 30 monitors the temperature of both the temperature T2 of the second temperature sensor 88 and the temperature T1 of the first temperature sensor 86, thereby performing the flow rate control. However, the aspect of the invention is not limited to this. That is, the flow rate control may be performed solely based on the temperature T2 of the second temperature sensor 88.

Second Embodiment

Next, a vehicular air-conditioning apparatus 10 related to a second embodiment will be described. In the vehicular air-conditioning apparatus 10 of the first embodiment, the flow passage control valve 48 adjusts the flow rate of the coolant that flows into the adsorption-desorption device (22A, 24A) of the container that performs the desorption process. However, in the second embodiment, the first pump 46 is formed so as to adjust the flow rate of the coolant that flows into the adsorption-desorption device (22A, 24A) of the container that performs the desorption process. The present embodiment has the same configuration as the first embodiment except that the flow passage control valve 48 and the bypass flow passage 40C are removed from the first embodiment.

In the control device 30 of the present embodiment, the air-conditioning control means 210 adjusts the discharge amount of the first pump 46 according to the temperatures of the coolant measured by the first temperature sensor 86 and the second temperature sensor 88, and adjusts the flow rate of the coolant that flows into the adsorption-desorption device (22A, 24A) of the container that performs the desorption process.

According to the present embodiment, by reducing the flow rate of the coolant in the first circulation circuit 40 to be below the predetermined flow rate with the first pump 46, the temperature of the coolant rises at an earlier stage due to the heat received from the engine 80 or the exhaust heat recovery device 82, the high-temperature heat source needed for the desorption process can be secured at an earlier stage. Additionally, according to the present embodiment, the flow rate of the coolant, which flows into the adsorption-desorption device (22A, 24A) of the container that performs the desorption process solely by the adjustment of the output of the first pump 46, can be rapidly adjusted compared to a case where the valve 48A that needs rotational driving for the flow rate control is used.

In addition, in the present embodiment, the flow passage control valve 48 and the bypass flow passage 40C are not provided. However, the flow passage control valve 48 and the bypass flow passage 40C may be provided as in the first embodiment. In this case, the air-conditioning control means 210 can simultaneously control the flow passage control valve 48 and the first pump 46 to adjust the flow rate of the coolant that flows into the adsorption-desorption device (22A, 24A) of the container that performs the desorption process. For example, when the engine 80 is cold, the flow rate of the coolant, which flows into the adsorption-desorption device (22A, 24A) of the container that performs the desorption process, is reduced to be below the predetermined flow rate by adjusting the flow passage control valve 48 to the slightly opened side and making the discharge amount of the first pump 46 low. Additionally, after the end of the warming-up of the engine 80, the flow rate of the coolant, which flows into the adsorption-desorption device (22A, 24A) of the container that performs the desorption process, is returned to the predetermined flow rate by adjusting the flow passage control valve 48 to the fully opened side and making the discharge amount of the first pump 46 high.

Third Embodiment

Next, a vehicular air-conditioning apparatus 10 related to a third embodiment will be described. In the first embodiment, the control device 30 measures the temperature of the coolant, which flows into the adsorption-desorption device (22A, 24A) of the container that performs the desorption process, using the second temperature sensor 88. In contrast, in the present embodiment, the temperature of the coolant, which flows into the adsorption-desorption device (22A, 24A) of the container that performs the desorption process, is estimated from the temperature, flow rate, and specific heat of a medium (exhaust gas, coolant) that passes through the exhaust heat recovery device 82. In the present embodiment, the second temperature sensor 88 is excluded from the first embodiment, and the control device 30 is provided with temperature calculation means 220. In addition, the rest of the configuration is the same as that of the first embodiment. Hereinafter, differences from the first embodiment will mainly be described.

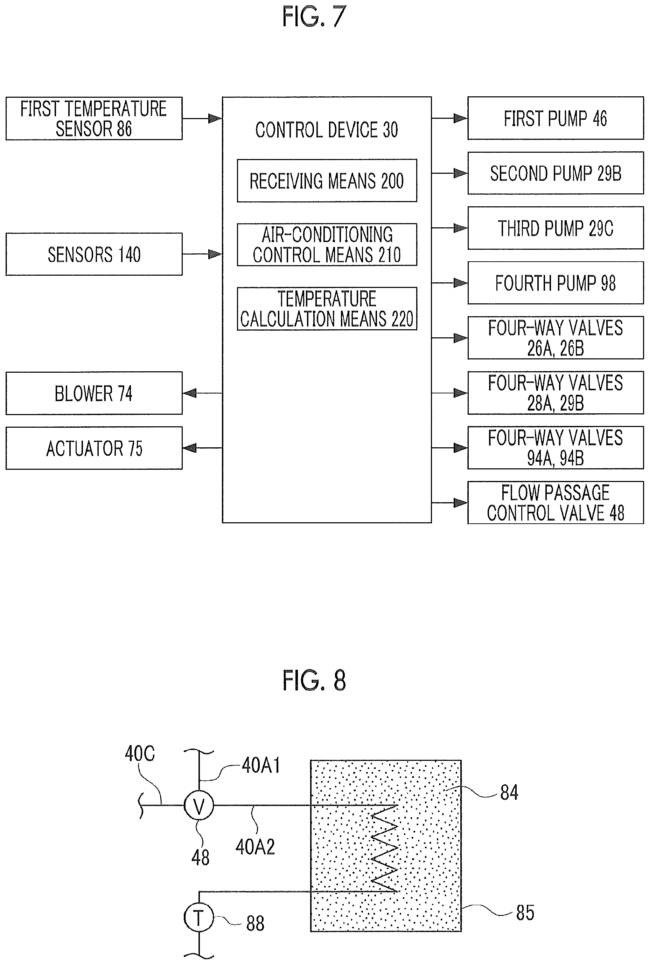

As illustrated in FIG. 7, the first temperature sensor 86 that is a temperature sensor provided within the first circulation circuit 40, and existing sensors 140 (an exhaust gas temperature sensor, an air flow sensor, an injector, and the like) on a vehicle are electrically connected to the control device 30 of the present embodiment. Additionally, the control device 30 is provided with the temperature calculation means 220 in addition to the receiving means 200 and the air-conditioning control means 210. The temperature calculation means 220 calculates the temperature of the coolant that flows into the adsorption-desorption device (22A, 24A) of the container that performs the desorption process, in other words, the temperature of the coolant that flows out of the exhaust heat recovery device 82.

Here, the temperature of the coolant that flows out of the exhaust heat recovery device 82 can be calculated from Equation 1.

$$\text{Tlout} = \text{Tlin} + \text{Cpg} \times \text{Gg} \times (\text{Tgin} - \text{Tlin})/(\text{Cpl} \times \text{Gl}) \ldots \text{(Equation 1)}$$

Here, Tlout is the temperature of the coolant that flows out of the exhaust heat recovery device 82, Tlin is the temperature of the coolant that flows into the exhaust heat recovery device 82, Tgin is exhaust gas temperature, Cpl is the specific heat of the coolant, CPg is the specific heat of the exhaust gas, Gl is the mass flow rate of the coolant, and Gg is the mass flow rate of the exhaust gas.

Tlin is measured by the first temperature sensor 86. That is, Tlin = T1. Tgin is measured by, for example, an existing exhaust gas temperature sensor mounted on a catalytic converter. Coefficient values calculated in advance can be used regarding Cpl and Cpg. Gl can be calculated, for example, based on the output information (a voltage value, an output time, and the like) of the first pump 46 obtained by the temperature calculation means 220. Gg can be calculated, for example, based on the amount of intake air to the engine 80 or the amount fuel injected into the engine 80. Here, the amount of intake air can be calculated by the existing air flow sensor, and the amount fuel injected can be calculated using the output information (the number of times of injection, an output time, and the like) of the injector.

As described above, the temperature calculation means 220 can calculate the temperature of the coolant that flows out of the exhaust heat recovery device 82 based on the information from the existing sensors 140 (the exhaust gas temperature sensor, the air flow sensor, the injector, and the like). According to the present embodiment, the second temperature sensor 88 exclusively provided for the flow rate control can be excluded, and the simplification of the structure of the vehicular air-conditioning apparatus 10 and cost reduction can be realized.

Fourth Embodiment

Next, a vehicular air-conditioning apparatus 10 related to a fourth embodiment will be described. The fourth embodiment is configured such that, in the configuration of the first embodiment, the flow rate of the coolant, which flows into the adsorption-desorption device of the container that performs the desorption process, is reduced to be below a predetermined flow rate in accordance with a decrease in the temperature T2 of the coolant that flows into the adsorption-desorption device (22A, 24A) of the container that performs the desorption process.

Specifically, the valve opening position of the flow passage control valve 48 of the present embodiment is determined according to the temperature T2 of the second temperature sensor 88. Also, the air-conditioning control means 210 adjusts the flow passage control valve 48 so as to be at a valve opening position corresponding to the temperature T2 of the second temperature sensor 88. According to the present embodiment, the temperature of the coolant to be supplied to the adsorption-desorption device (22A, 24A) of the container that performs the desorption process can be efficiently raised to an optimal temperature for the desorption process.

Fifth Embodiment

Next, a vehicular air-conditioning apparatus 10 related to a fifth embodiment will be described. The fifth embodiment includes a heat storage unit 85 as the "heat supply device". Specifically, in the fifth embodiment, the heat storage unit 85 is provided instead of the exhaust heat recovery device 82 in the configuration of the first embodiment.

As illustrated in FIG. 8, the heat storage unit 85 of the present embodiment has a heat storage material 84, and stores the heat generated from the coolant set into the "high-temperature" by the engine 80. As the heat storage material 84, a sensible-heat heat storage material using the specific heat of a substance, a latent-heat heat storage material using the latent heat generated with a solid-liquid phase change of a substance, or a chemical heat storage material using a chemical reaction heat can be adopted.

Here, for example in the latent-heat heat storage material, in a case where the temperature of the heat storage material 84 is lower than the temperature of the coolant, the heat of the coolant is stored in the heat storage material 84. Additionally, in a case where the temperature of the heat storage material 84 is higher than the temperature of the coolant, heat is radiated from the heat storage material 84 to the coolant.

According to the present embodiment, the following effects are exhibited. That is, in a configuration having no heat storage unit 85, when the operation rate of the engine 80 decreases, the temperature of the "high-temperature" coolant falls and the driving energy (heat energy) also decreases. Therefore, the cooling performance decreases. In contrast, in the present embodiment, the exhaust heat from the engine 80 is stored in the heat storage unit 85 during the operation of the engine 80. For this reason, for example, even in a case where the operation rate of the engine 80 has decreased, such as at stop-start, or even at the first starting in the morning, a high-temperature heat source that is sufficient to promote the desorption process in the adsorption-desorption device (22A, 24A) can be secured. That is, in the present embodiment, the temperature of the coolant, which flows into the adsorption-desorption device (22A, 24A) of the container that performs the desorption process, can be raised at an earlier stage by releasing the heat, which is stored in the heat storage unit 85 at the cool-temperature of the engine 80, to the coolant.

In addition, in the present embodiment, the heat storage unit 85 is provided instead of the exhaust heat recovery device 82. However, the exhaust heat recovery device 82 and a heat storage unit 85 may be provided side by side. Specifically, in the second upstream pipe 40A2, the heat storage unit 85 can be disposed downstream of the exhaust heat recovery device 82. Accordingly, the amount of heat stored in the heat storage unit 85 can be increased.

Supplement

In addition, the temperatures exemplified in the respective embodiments are merely examples and can be appropriately selected depending on the material or the like of the heat storage material to be used.

In the respective embodiments, the exhaust heat recovery device 82 is provided as the "heat supply device". However, the aspect of the invention is not limited to this. That is, a combustion heater or an electric heater may be provided instead of the exhaust heat recovery device 82. The combustion heater or the electric heater can compensate for the heat that is insufficient in the engine 80 by radiating heat to the coolant when the engine 80 is cold, like the exhaust heat recovery device 82.

Additionally, regarding the vehicular air-conditioning apparatus 10 of the invention, the above-described embodiments may be independently performed, or the respective embodiments may be appropriately combined together.

**Claims**

1. A vehicular air-conditioning apparatus (10) comprising:

an adsorption heat pump (20) configured to include a plurality of containers (22, 24) provided with an adsorption-desorption device (22A, 24A) and an evaporation-condensation device (22B, 24B), the adsorption-desorption device (22A, 24A) being configured to perform adsorption and desorption of a refrigerant, the evaporation-condensation device (22B, 24B) being configured to perform evaporation and condensation of the refrigerant, and the adsorption heat pump (20) being configured to repeatedly perform an adsorption process and a desorption process in the adsorption-desorption device (22A, 24A) within each of the containers (22, 24);

a circulation path configured to circulate a coolant between an internal combustion engine (80) and the adsorption-desorption device (22A, 24A) of the container (22, 24) that performs the desorption process;

a heat supply device (82) that is disposed in the circulation path to heat the coolant that circulates through the circulation path; and

a control device (30) configured to control a flow rate of the coolant in the circulation path such that a flow rate of the coolant, which flows into the adsorption-desorption device (22A, 24A) of the container (22, 24) that performs the desorption process, is reduced to be below a predetermined flow rate when a temperature of the coolant in the circulation path on a downstream side of the heat supply device (82) is lower than a predetermined value.

2. The vehicular air-conditioning apparatus (10) according to claim 1, wherein the control device (30) is configured to control the flow rate of the coolant in the circulation path such that the flow rate of the coolant flowing into the adsorption-desorption device (22A, 24A) is reduced to be below the predetermined flow rate when a temperature of the coolant in the circulation path on an upstream side of the heat supply device (82) is lower than the predetermined value.

3. The vehicular air-conditionng apparatus (10) according to claim 1 or 2, wherein:

the circulation path includes a flow passage control valve (48) disposed between the internal combustion engine (80) and the heat supply device (82);
the flow passage control valve (48) is configured to cause the coolant to selectively bypass from the circulation path between the internal combustion engine (80) and the heat supply device (82) to the circulation path downstream of the adsorption-desorption device (22A, 24A) of the container (22, 24) that performs the desorption process; and
the control device (30) controls the flow passage control valve (48) such that the flow rate of the coolant flowing into the adsorption-desorption device (22A, 24A) is reduced to be below the predetermined flow rate by adjusting a flow rate of the coolant caused to bypass downstream of the adsorption-desorption device (22A, 24A).

4. The vehicular air-conditioning apparatus (10) according to any one of claims 1 to 3, wherein:

the circulation path includes a pump configured to circulate the coolant through the circulation path; and
the control device (30) is configured to control the pump such that the flow rate of the coolant flowing into the adsorption-desorption device (22A, 24A) is reduced to be below the predetermined flow rate by reducing a discharge amount of the pump.

5. The vehicular air-conditioning apparatus (10) according to any one of claims 1 to 4, wherein the control device (30) is configured to control the flow rate of the coolant in the circulation path such that the flow rate of the coolant flowing into the adsorption-desorption device (22A, 24A) of the container (22, 24) that performs a desorption process is greatly reduced to be below the predetermined flow rate as the temperature is lower when the temperature of the coolant in the circulation path on the downstream side of the heat supply device (82) is lower than the predetermined value.

6. The vehicular air-conditioning apparatus (10) according to any one of claims 1 to 5, wherein the control device (30) is configured to control the flow rate of the coolant in the circulation path such that the flow rate of the coolant flowing into the adsorption-desorption device (22A, 24A) reaches the predetermined flow rate in a case where the temperature of the coolant in the circulation path on the downstream side of the heat supply device (82) is equal to or higher than the predetermined value.

7. The vehicular air-conditioning apparatus (10) according to any one of claims 1 to 6, wherein the heat supply device (85) includes a heat storage unit configured to store heat.

# FIG. 1

# FIG. 2

```
┌─────────────────────┐        ┌────────────────────────┐        ┌─────────────────────┐
│  FIRST TEMPERATURE  │───▶    │                        │    ───▶│   FIRST PUMP 46     │
│     SENSOR 86       │        │   CONTROL DEVICE 30    │        └─────────────────────┘
├─────────────────────┤        │                        │
│ SECOND TEMPERATURE  │───▶    │ ┌────────────────────┐ │    ───▶│  SECOND PUMP 29B    │
│     SENSOR 88       │        │ │ RECEIVING MEANS 200│ │        └─────────────────────┘
└─────────────────────┘        │ └────────────────────┘ │
                               │                        │    ───▶│   THIRD PUMP 29C    │
                               │ ┌────────────────────┐ │        └─────────────────────┘
                               │ │  AIR-CONDITIONING  │ │
                               │ │ CONTROL MEANS 210  │ │    ───▶│  FOURTH PUMP 98     │
                               │ └────────────────────┘ │        └─────────────────────┘
                               │                        │
                               │                        │    ───▶│  FOUR-WAY VALVES    │
                               │                        │        │     26A, 26B        │
┌─────────────────────┐        │                        │
│     BLOWER 74       │◀───    │                        │    ───▶│  FOUR-WAY VALVES    │
└─────────────────────┘        │                        │        │     28A, 29B        │
┌─────────────────────┐        │                        │    ───▶│  FOUR-WAY VALVES    │
│    ACTUATOR 75      │◀───    │                        │        │     94A, 94B        │
└─────────────────────┘        │                        │
                               │                        │    ───▶│   FLOW PASSAGE      │
                               └────────────────────────┘        │ CONTROL VALVE 48    │
                                                                 └─────────────────────┘
```

FIG. 3A   FIG. 3B   FIG. 3C   FIG. 3D

EP 3 348 431 A1

FIG. 4

# FIG. 5

# FIG. 6

```
                    START
                              S100
           FULL OPENING OPERATION

                              S101
              IGNITION OFF
            OR AIR-CONDITIONER        Y
                 OFF?
                  N
                              S102
              T1 ≥ 90°C AND
         Y     T2 < 100°C?
                  N
                              S103
            T2 ≥ 105°C?            Y
                  N
                    S104                        S106
         IS VALVE SLIGHTLY            IS VALVE FULLY
      Y      OPENED?                     OPENED?         Y
                  N    S105                  N    S107
         VALVE CLOSING                VALVE OPENING
      OPERATION AT ONE STEP        OPERATION AT ONE STEP

                    END
```

# FIG. 7

| FIRST TEMPERATURE SENSOR 86 | → | CONTROL DEVICE 30 | → | FIRST PUMP 46 |

CONTROL DEVICE 30
- RECEIVING MEANS 200
- AIR-CONDITIONING CONTROL MEANS 210
- TEMPERATURE CALCULATION MEANS 220

FIRST TEMPERATURE SENSOR 86 →

SENSORS 140 →

BLOWER 74 ←

ACTUATOR 75 ←

→ FIRST PUMP 46
→ SECOND PUMP 29B
→ THIRD PUMP 29C
→ FOURTH PUMP 98
→ FOUR-WAY VALVES 26A, 26B
→ FOUR-WAY VALVES 28A, 29B
→ FOUR-WAY VALVES 94A, 94B
→ FLOW PASSAGE CONTROL VALVE 48

# FIG. 8

40C

40A1

84

V

40A2

48

T — 88

85

Europäisches
Patentamt

European
Patent Office

Office européen
des brevets

# EUROPEAN SEARCH REPORT

Application Number

EP 17 21 1180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2014 118007 A (TOYOTA MOTOR CORP; TOYOTA CENTRAL RES & DEV) 30 June 2014 (2014-06-30) | 1,2,4-7 | INV. B60H1/32 F25B17/02 F25B27/02 F25B15/16 B60H1/00 F25B17/08 |
| A | * paragraphs [0019] - [0023], [0028] - [0035], [0047] - [0050]; claims 1-6; figures 1-4 * | 3 | |
| Y | DE 10 2014 200224 A1 (BAYERISCHE MOTOREN WERKE AG [DE]) 9 July 2015 (2015-07-09) * paragraphs [0005], [0009]; claims 1-2,4-6; figure 2 * | 1,2,4-6 | |
| Y | US 2014/053579 A1 (SHAIKH FURQAN ZAFAR [US] ET AL) 27 February 2014 (2014-02-27) * paragraphs [0037], [0040] - [0050], [0062]; claims 1-4, 15-16; figures 3, 4,5a,7,9 * | 7 | |
| A,D | JP 2004 291669 A (DENSO CORP) 21 October 2004 (2004-10-21) * paragraphs [0040] - [0042], [0049] - [0053]; claims 1-4; figures 1-4 * | 1-7 | TECHNICAL FIELDS SEARCHED (IPC) B60H F25B |
| A | US 2014/250927 A1 (YOSHIDA HIROAKI [JP] ET AL) 11 September 2014 (2014-09-11) * paragraphs [0076] - [0105]; claims 1-9; figures 7-8 * | 1-7 | |
| A | JP 2010 107156 A (YANMAR CO LTD) 13 May 2010 (2010-05-13) * the whole document * | 1-7 | |

The present search report has been drawn up for all claims

| Place of search | Date of completion of the search | Examiner |
|---|---|---|
| Munich | 1 June 2018 | Kristensen, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 21 1180

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2018

| Patent document cited in search report | Publication date | Patent family member(s) | | Publication date |
|---|---|---|---|---|
| JP 2014118007 A | 30-06-2014 | JP | 6139125 B2 | 31-05-2017 |
| | | JP | 2014118007 A | 30-06-2014 |
| DE 102014200224 A1 | 09-07-2015 | DE 102014200224 A1 | | 09-07-2015 |
| | | WO | 2015104141 A1 | 16-07-2015 |
| US 2014053579 A1 | 27-02-2014 | CN | 103625240 A | 12-03-2014 |
| | | US | 2014053579 A1 | 27-02-2014 |
| JP 2004291669 A | 21-10-2004 | NONE | | |
| US 2014250927 A1 | 11-09-2014 | CN | 103946648 A | 23-07-2014 |
| | | JP | 5725201 B2 | 27-05-2015 |
| | | JP WO2013076805 A1 | | 27-04-2015 |
| | | US | 2014250927 A1 | 11-09-2014 |
| | | WO | 2013076805 A1 | 30-05-2013 |
| JP 2010107156 A | 13-05-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004291669 A